# EUROPEAN PATENT APPLICATION

(11) **EP 1 727 058 A1**
(43) Date of publication of application: **29.11.2006**
(21) Application number: 06010614.3
(22) Date of filing: 23.05.2006
(51) Int. Cl.: G06F 17/30

(54) **System and method for processing spatial data**

(30) Priority: 24.05.2005 US 136860
(71) Applicant: Acquis, Inc., Palo Alto CA 94301 (US)
(72) Inventor: McMahon, John N., Swords Dublin (IE); McGeown, Liam, Palo Alto, CA 94301 (US)
(74) Representative: Schäfer, Matthias W.

(57) **Abstract**

Embodiments of the present invention include systems and methods of processing spatial data. In one embodiment, the present invention includes a method of processing spatial data comprising retrieving spatial data from a remote database, loading the spatial data into a client, and generating a spatial feature on the client using the spatial data. In one embodiment, spatial data may be spatial geometry objects such as polygons. In another embodiment, spatial data may be topology data. Topology data may be used to perform edits and then used to generate spatial features or reconstruct geometries.

## Description

### BACKGROUND

The present invention relates to spatial data, and in particular, to a system and method for processing spatial data.

Spatial data refers to data that relates to the positions of elements in a space, such as an N-dimensional space. Spatial data, which is sometimes referred to as "location information," may be stored in a variety of formats on a variety of mediums. Spatial data may be used for defining spatial features such as points of interest, roads, routes, rivers, voting districts, or city, county, state, or national boundaries or locations of physical objects to name just a few.

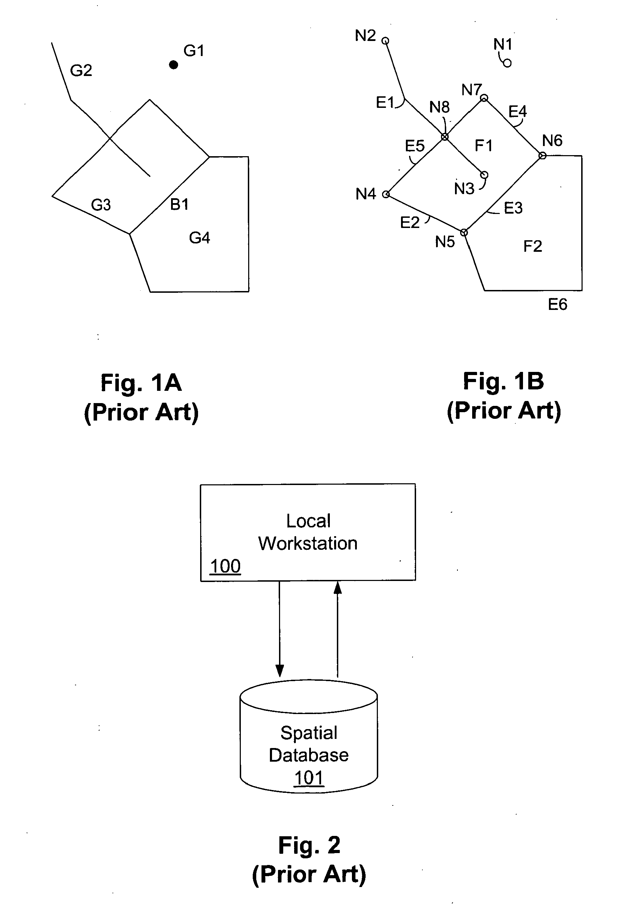

Recently, it has become increasingly common to store spatial data in databases. Spatial data may be stored in a database using a variety of techniques. For example, some databases store spatial data as spatial geometries (i.e., as a spatial geometry object). A spatial geometry may include both spatial geometry elements and spatial reference data (i.e., data pertaining to the applicable coordinate system). Spatial geometry elements, in turn, may comprise points, lines (i.e., two or more points), polygons (i.e., closed lines such as rectangles or circles), collections of multiple spatial geometry elements (herein, "a collection"), or a hierarchy, for example. Fig. 1A shows examples of spatial geometries. Fig. 1A shows four different geometries: a point G1, a line G2, which include a plurality of points, and two polygons G3 and G4. As mentioned above, these objects may be used to model spatial features in the real world, such as roads, land parcels or points of interest. Using a spatial geometry object approach, different geometries are stored independently as separate complete objects. For example, polygons G3 and G4 may share a boundary B1, but since these objects are stored independently, all the points on B 1 are stored twice: once in association with G3 and once in association with G4. Thus, storing data as spatial geometries may require a large amount of storage capacity when stored in a database.

Another approach for storing spatial data is to store the spatial data topologically. Topology is a branch of mathematics concerned with objects in space. Topological models are based on the properties of geometric figures or solids that are not changed by deformation of a coordinate space, such as stretching or bending. Topological relationships, such as "touch," "inside," "contains," "covers," "coveredby," remain constant when a coordinate space is deformed. Examples of relationships that are not topological include "length," "distance," and "area." These relationships do change when the coordinate space is deformed. In a topology model, primitives such as "nodes," "edges," and "faces" may be stored in a database (typically only once) and may be separately associated with one or more real world spatial features. Each spatial feature may then be associated with a list of primitives. For example, Fig. 1B shows an example of representing spatial data topologically. For instance, point G1 is now represented as a node N1. Similarly, line G2 is represented as an edge E1 between nodes N2 and N3. Polygon G3, which may correspond to a county, may be represented as a face F 1 made up of edges E2, E3, E4, and E5 between nodes N4, N5, N6, and N7. Likewise, polygon G4 may be represented as a face F2 made up of edges E3 and E6 between nodes N5 and N6. It should be noted that a node need not always represent a point. For example, node N8 may not represent a point geometry, but may be a necessary topological primitive to represent the intersection of edges E1 and E5. If G3 and G4 represent two counties, then these real world spatial features can be associated with F1 and F2, respectively. Thus, many spatial features may be defined using topological primitives, but the topological primitives may only be stored once (i.e., different spatial features may share topological primitives).

Fig. 2 illustrates a prior art technique for processing spatial data. According to this simple approach, spatial data is either processed by a local workstation or in the database. For example, a traditional technique for processing spatial geometry objects (e.g., polygons) has been to retrieve the polygon data from database 101 to a workstation 100. Workstation 100 may have a custom program for analyzing and modifying the geometry object. Since such an approach is operating on the raw spatial data, complex and computationally intensive algorithms are often required for different processing functions such as editing or rendering. Thus, because of the complexity and computational intensity associated with processing polygons and other spatial geometry objects, processing such objects in the database would be unworkable, and it is therefore advantageous to retrieve the data onto a workstation and perform the processing using sophisticated programming techniques.

Topological data has been traditionally processed using built-in database functions and procedure. Thus, processing spatial data stored topologically presents a different problem. For instance, while topological data processing is less computationally intensive than for processing polygons, it is still intensive enough that many topological transactions may cause the database to slow down dramatically. For instance, in some applications it may be desirable to allow many users to access and manipulate topological data from the same database. However, if the database storing such topological information were to receive requests from multiple users it would quickly slow down and users would be forced to wait idly while the system processes the multiple requests.

Thus, there is a need for improved techniques to processing spatial data. The present invention solves these and other problems by providing a system and method for processing spatial data.

### SUMMARY

Embodiments of the present invention include systems and methods of processing spatial data. In one embodiment, the present invention includes a method of processing spatial data comprising retrieving spatial data from a remote database, loading the spatial data into a client, and generating a spatial feature on the client using the spatial data.

In one embodiment, the method further comprises editing the spatial data on the client. In another embodiment, the method further comprises loading the edited spatial data into the remote database as a topology.

In one embodiment, the method further comprises displaying the spatial geometry object to a user.

In one embodiment, the spatial data is topology data. The topology data may include nodes, edges, or faces. Furthermore, the nodes, edges, or faces may be stored in the remote database as a table, and the topology data may further comprise relationship data for associating topology primitives to the spatial feature.

In one embodiment, generating a spatial feature comprises reconstructing a spatial geometry object from a topology. Additionally, reconstructing may comprise identifying one or more edges that do not have adjacent faces and combining a plurality of points associated with the one or more edges to form a resulting spatial geometry. Alternatively, reconstructing may include ordering edges based on common end nodes. In another embodiment, reconstructing may comprise identifying edges associated with a plurality of spatial features and deleting duplicate edges from the plurality of spatial features.

In one embodiment, a spatial geometry object may comprise a point, a line, a polygon, a collection, or a hierarchy and associated reference data.

In one embodiment, the present invention includes a method of processing spatial data comprising retrieving topology data from a remote database, loading the topology data into a client, and generating a spatial feature on the client using the topology data.

In one embodiment, the present invention includes a method of processing spatial data comprising retrieving one or more first spatial geometry objects from a remote database, loading the spatial geometry objects onto a client, and transforming the first spatial geometry objects into topology primitives on the client.

Additional embodiments will be evident from the following detailed description and accompanying drawings, which provide a better understanding of the nature and advantages of the present invention.

### BRIEF DESCRIPTION OF THE DRAWINGS

Fig. 1A shows example spatial geometries.

Fig. 1B shows an example of representing spatial data topologically.

Fig. 2 illustrates a prior art technique for processing spatial data.

Fig. 3 illustrates processing spatial data according to one embodiment of the present invention.

Fig. 4 illustrates a method of processing spatial data according to one embodiment of the present invention.

Fig. 5 illustrates a method of processing spatial data according to another embodiment of the present invention.

Fig. 6 illustrates spatial data processing according to another embodiment of the present invention.

Fig. 7 illustrates spatial data processing software according to another embodiment of the present invention.

Fig. 8 illustrates spatial data processing according to another embodiment of the present invention.

Fig. 9 is an example of editing spatial data according to one embodiment of the present invention.

Fig. 10 shows a topology and a spatial feature to illustrate the technique of Fig. 9.

Fig. 11 is an example of reconstructing a linear feature from topology primitives according to another embodiment of the present invention.

Fig. 12 shows a topology and a spatial feature to illustrate the technique of Fig. 11.

Fig. 13 is an example of editing spatial data according to another embodiment of the present invention.

Fig. 14 shows a topology and a spatial feature to illustrate the technique of Fig. 13.

Fig. 15 is an example of a multilayer hierarchy.

### DETAILED DESCRIPTION

Described herein are techniques for processing spatial data. In the following description, for purposes of explanation, numerous examples and specific details may be set forth in order to provide a thorough understanding of the present invention. It will be evident, however, to one skilled in the art that the present invention as defined by the claims may include some or all of the features in these examples alone or in combination with other features described below, and may further include obvious modifications and equivalents of the features and concepts described herein.

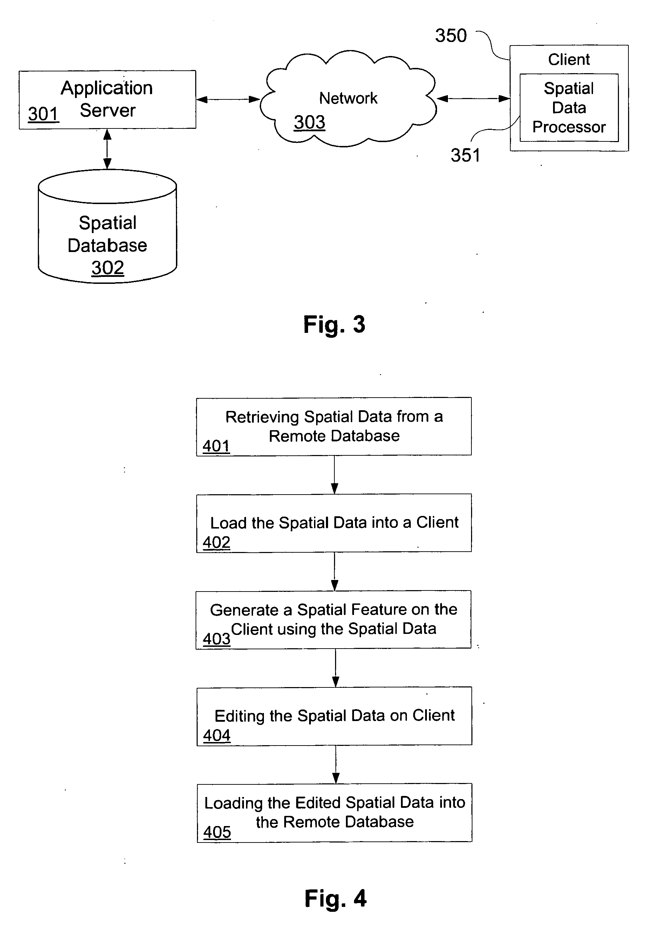

Fig. 3 illustrates processing spatial data according to one embodiment of the present invention. In one embodiment, the present invention includes a client 350 including a spatial data processor 351 residing on the client. Rather than processing spatial data locally on a database, client 350 retrieves spatial data from a database 302 and processes the spatial data locally on the client. Processing may include accessing the spatial data and displaying it to a user (e.g., by rendering the spatial data), editing the spatial data, or transforming the spatial data from one format to another, for example. An application server 301 may receive instructions from client 351 over a network 303 and retrieve spatial data from database 302. A user of client 350 may perform various processing tasks locally on the client using spatial data processor 351 so that database 302 is free from what may include computationally intensive processing tasks. Spatial data processor 351 may be a software program that resides on client 350 and includes one or more software components having instructions for processing the spatial data including instructions for retrieving, editing, transforming, reconstructing, rendering, or displaying the data and managing other client functionality, for example.

Fig. 4 illustrates a method of processing spatial data according to one embodiment of the present invention. At 401, client 350 may retrieve spatial data from remote database 302. At 402, the spatial data may be loaded from the remote database into the client 350 over a network. At 403, spatial features may be generated on the client using the retrieved spatial data. For example, spatial features may include real world objects such as a road, land boundary (e.g., cadastre), voting district, city, county, state, or national boundary to name just a few. In one embodiment described in more detail below, the spatial data is topology data, and the spatial features may be generated by reconstructing spatial geometries (e.g., polygons) from topology primitives such as nodes, edges, faces, for example. In another embodiment, the spatial data includes one or more spatial geometries. As described below, spatial geometries may be displayed to a user and/or transformed into topologies and edited. Spatial geometries that have been transformed into topological primitives may be efficiently edited and may be transformed back into geometry objects, for example. Editing is shown at step 404. At step 404, spatial data may be edited on the client, which reduces computational loading on the spatial database 302 and/or application server 301. At step 405, the edited spatial data may be transferred from client 350 and loaded into remote database 302.

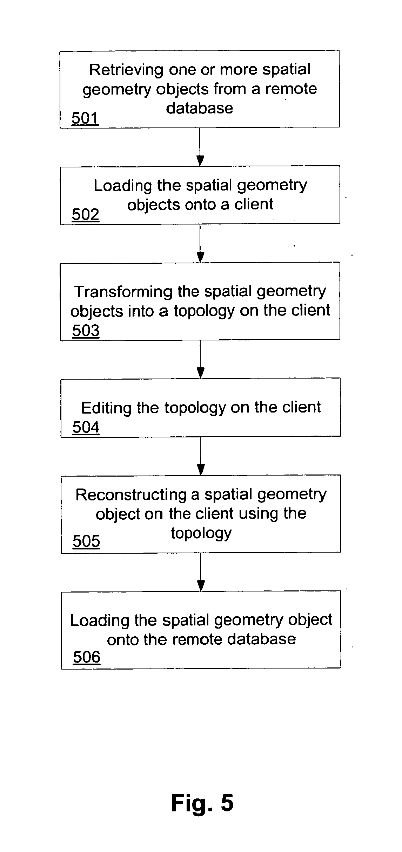

Fig. 5 illustrates a method of processing spatial data according to another embodiment of the present invention. At 501, spatial geometries such as, for example, points, lines, polygons, collections or hierarchies, may be retrieved from a remote database. At 502, the spatial geometry objects are loaded onto a client. At 503, the spatial geometry objects may be transformed into topologies on the client. For example, the data associated with multiple polygons may be transformed into topology primitives such as nodes, edges, and faces may be associated with the geometries. At 504, the topology data may be edited on the client (e.g., by a user through a graphical user interface). At 505, the edited topology data may be used to reconstruct spatial geometries on the client. At 506, the reconstructed spatial geometries may be transferred back to the remote database and loaded onto the remote database for storage. For example, if multiple polygons represent voting districts, and if the boundary between two voting districts changes, then a user may retrieve the polygons associated with the voting districts, load the polygons onto a client, transform the polygons into nodes, edges, and faces, and move a node, edge, or face as necessary to represent the change in the voting district. The modified topology data may be used to reconstruct modified polygons, and the modified polygons may be reloaded into the remote database. Alternatively, spatial data may be stored in a remote database as topology data.

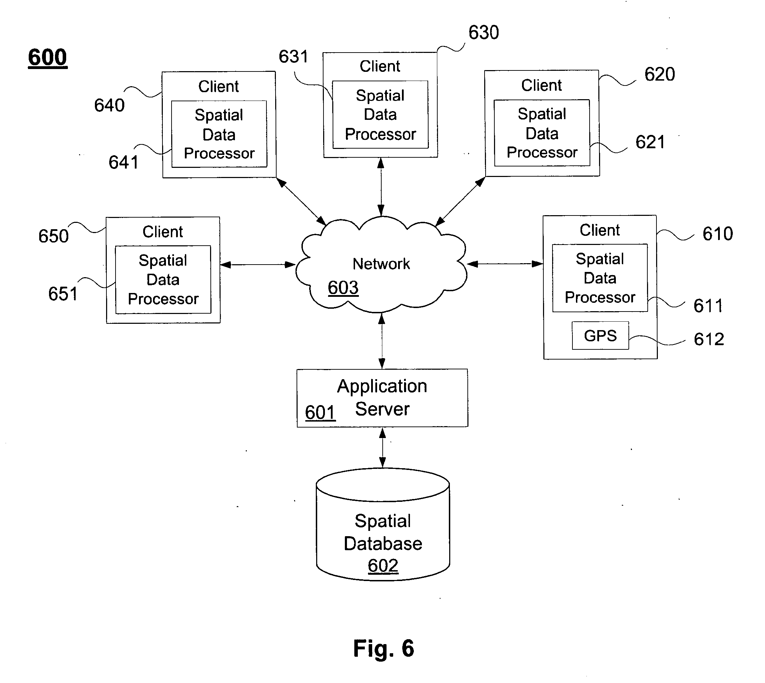

Features and advantages of the present invention include improving the efficiency of spatial data processing by performing computationally intensive spatial data processing functions on multiple clients rather than on a single database where the data resides. Fig. 6 illustrates spatial data processing according to another embodiment of the present invention. Spatial data processing system 600 includes a remote database 602 of spatial data (i.e., a spatial database) coupled to a plurality of client systems 610, 620, 630, 640, and 650 through a application server 601 over a network 603. Each client system 610, 620, 630, 640, and 650 includes a spatial data processor 611, 621, 631, 641, and 651 A variety of client systems may be used. Clients may include computer systems coupled to the application server over a local area network or the Internet, for example. In one embodiment, the client systems are portable devices coupled to database 602 over a wireless network, and the client transmits a request for spatial data to database 602 wirelessly. Database 602 then transfers the spatial data to the client wirelessly, and the client may perform a variety of processing functions of the data before returning modified spatial data to database 602 wirelessly. As can be seen, the present invention allows multiple users to process spatial data simultaneously without overloading the database or server where the data is stored. In one embodiment, a client may include a global positioning system ("GPS") 612, and users may modify the spatial data automatically by activating the GPS. For example, if a user is located at a point of interest or at the intersection of a boundary, the user may automatically associate a position received from the GPS with a node or other topology primitive. The information may also be used to modify the data for other primitives that have been retrieved from the remote database. After one or more modifications have been recorded, the user may transmit the changes wirelessly back to the remote database either as topologies or as spatial geometries.

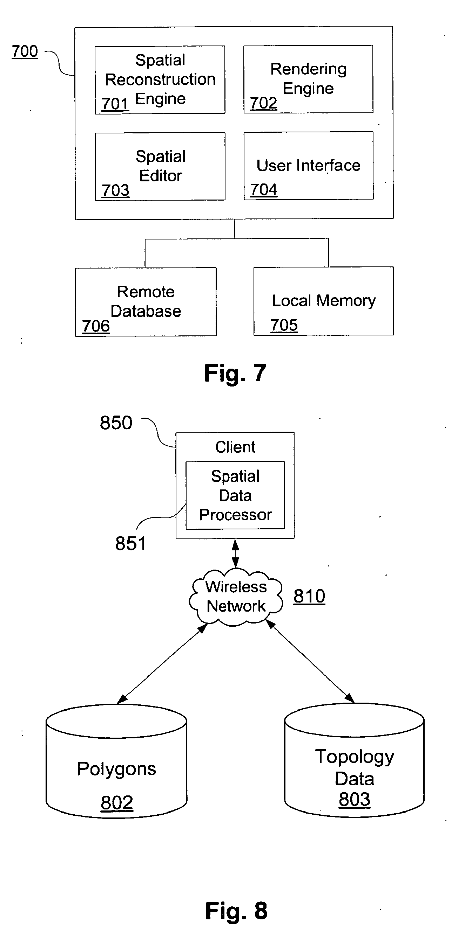

Fig. 7 is an example of spatial data processing software according to another embodiment of the present invention. Spatial data processing software 700 residing on a client system may include a spatial reconstruction engine 701, a rendering engine 702, a spatial data editor 703, and a user interface 704. Spatial reconstruction engine 701 may receive topology data as an input and generate spatial geometries. Rendering engine 702 may convert the underlying spatial geometry data into something that may be displayed to a user. Spatial processing software 700 may further include a spatial editor 704. Spatial editor 704 may include instructions for providing an interactive graphical user interface that allows a user to view the retrieved spatial data, and graphically modify the spatial data on the client. Edits may include selecting spatial geometry objects, splitting polygons, merging polygons, or changing the boundaries of adjacent polygons, for example. In response to a user's edits, underlying primitives may be changed. These changes may be propagated to the user's display by transforming the modified primitives into modified spatial geometries such as polygons, which may be rendered and displayed to a user. Spatial processing software 700 may also include a user interface component 704 for receiving instructions from a user and displaying menu options, such as an editing palate for example, and various other features of the software to the user. In one embodiment, spatial processing software components may be written in Java, for example. It is to be understood that other programming languages may also be used. In one embodiment, spatial processing software may allow a user to store changes to spatial data locally as a local project in local memory 705 or automatically store changes back to the remote database 706. In one embodiment, spatial processing software 700 may maintain a log of edits. When an edit is stored locally, for example, a user may "undo" changes to the spatial data or "redo" changes to the spatial data by accessing the edit log through an "undo" or "redo" menu button.

Fig. 8 illustrates spatial data processing according to another embodiment of the present invention. As shown in Fig. 8, spatial data processing software 851 on client 850 may access a database of spatial geometries (e.g., polygons) 802 or topologies 803. A user of spatial data processing software 851 may access spatial data by specifying the URL of the remote database and then selecting the desired "map" from a plurality of maps stored in each database. Spatial data from the remote database may be retrieved by selecting geometries or primitives for a given area of interest (e.g., a map displayed to a user or selected portions thereof). It is to be understood that remote databases may include both topologies and spatial geometry objects in a single database. In this example, a spatial geometry such as a point feature, line feature, or polygon may be accessed by client over a wireless network, transformed into a topology on client 850, edited, transformed back into a spatial geometry, and then loaded into remote database 802. Alternatively, topologies may be accessed from remote database 803. Topologies may be used to generate spatial features on a map on client 850, or they may be used to implement edits. Edited topologies may be transformed into spatial geometries and rendered or stored in a database as a geometry object, for example.

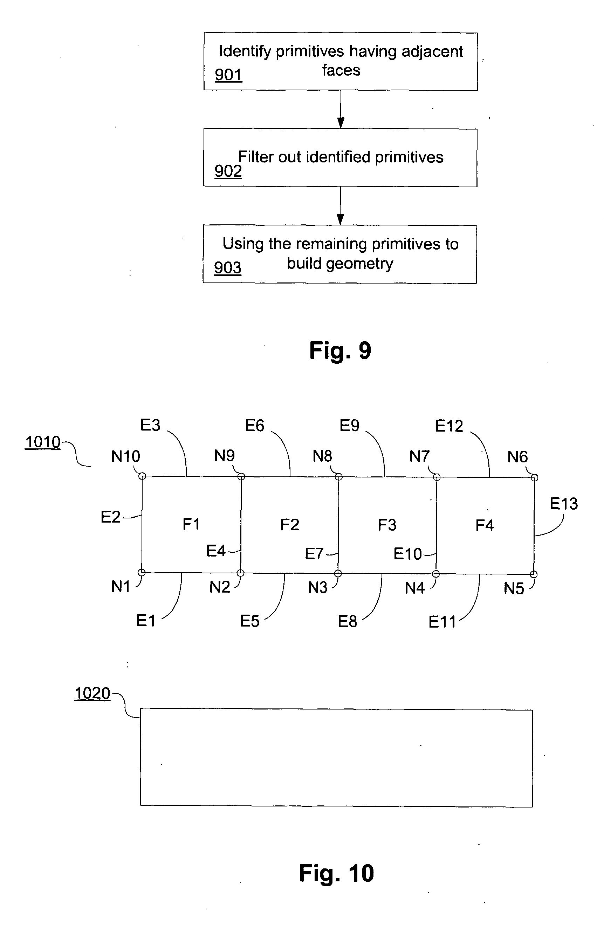

Fig. 9 is an example of editing spatial data according to one embodiment of the present invention. Fig. 9 is an example of a merge. At 901, primitives, such as edges, may be identified that have adjacent faces. At 902, the identified edges may be filtered out, which results in only those edges that do not have adjacent faces. At 903, the remaining edges may be used to build the merged polygon.

Fig. 10 shows a topology and a reconstructed spatial geometry to illustrate the technique of Fig. 9. A topology 1010 may include a plurality of nodes N1-N10, a plurality of edges E1-E13 between the nodes, and a plurality of faces F1-F4. Spatial features that are associated with these primitives may be lots of a housing subdivision. For example, four lots may be defined using the underlying topological primitives (these primitives may also be associated with many other spatial features). If the four lots are combined into a single lot, it would be desirable to merge the individual lots to make a single feature. In one embodiment, spatial data may be received as a spatial geometry object and transformed into topology 1010, for example. At step 901, the edges with adjacent faces are identified (here, E4, E7, E10, and E13). At step 902, these edges are filtered out. This may be accomplished by disassociating these edges from the spatial feature, for example. In one embodiment, the edges may be loaded into a temporary data structure (e.g., a temp topology model). The remaining topology (here, nodes N1-N10, edges E1-E3, E5-E6, E8-E9, and E11-E13 may form the new spatial feature with a single face F5 (not shown). From this modified topology, a spatial geometry may be reconstructed. The spatial geometry for this example will be polygon 1020. The data associated with polygon 1020 (e.g., points and coordinates) may be rendered and displayed to a user to represent the merged housing subdivision on a map, for example.

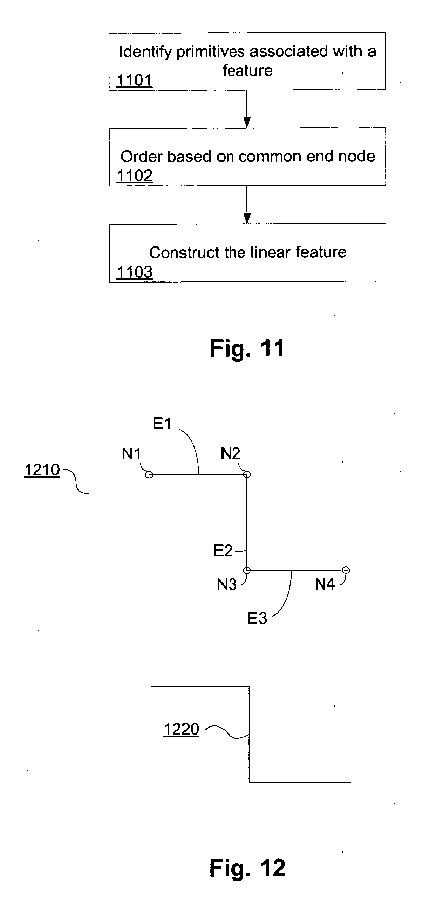

Fig. 11 is an example of reconstructing a linear feature from topology primitives according to another embodiment of the present invention. At 1101, primitives such as edges associated with the linear feature are identified. At 1102, the edges are ordered based on common end nodes. At 1103, the linear feature is constructed. For example, the linear feature may be an array of points associated with the ordered topological primitives.

Fig. 12 shows a topology and a linear feature to illustrate the technique of Fig. 11. The spatial feature may be a road or river, for example. The topology primitives associated with spatial feature 1210 are nodes N1-N4 and edges E1-E3. These are the primitives that would be identified at 1101 above. Since E1 and E2 have a common end node of N2, and since E2 and E3 have a common end node of N3, ordering these edges based on common end node will result in the desired sequence E1-E3. The data associated with these ordered topology primitives results in a linear feature 1220. For example, the underlying data associated with linear feature 1220 (e.g., points and coordinates) may be rendered and displayed to a user to represent a road, river or other linear feature on a map, for example.

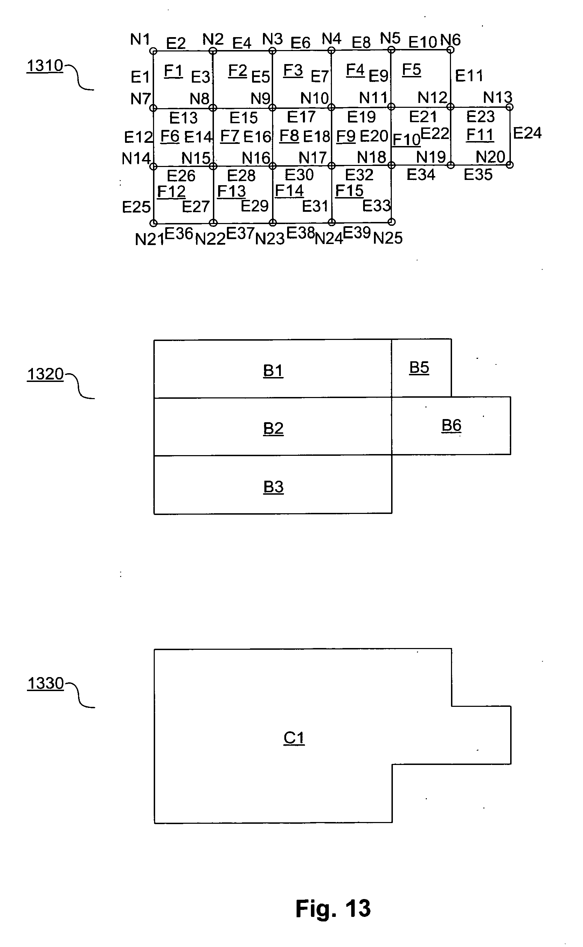

Fig. 13 is an example of reconstructing a hierarchical feature from topology primitives according to another embodiment of the present invention. Fig. 13 shows a plurality of topology primitives 1310 including nodes N1-N25, edges E1-E39, and faces F1-F 15. A plurality of different features may be associated with topology primitives 1310. For example, topology primitives 1310 may be used to represent a plurality blocks ("B1-B6") 1320. Block B1 may be associated with nodes 1-5 and 7-11, edges 1, 2, 4, 6, 8, 9, 13, 15, 17, and 19, and faces F1-F4. Similarly, block B2 may be associated with nodes 7-11, 14-18, edges 12, 13, 15, 17, 19, 20, 26, 28, 30, and 32, and faces F6-F9. As can be seen, topology primitives are shared between two different features. Here, B1 and B2 share nodes 7-11 and edges 13, 15, 17, and 19. Blocks B3, B4, B5, B6 may similarly be associated with topology primitives.

Fig. 13 illustrates spatial features that are hierarchically related. The first level of the hierarchy may be primitives, for example. A second level of the hierarchy may be the blocks B1-B6. Yet another level of the hierarchy may be a county ("C1") 1330 made up of blocks B1-B6. It is to be understood that the hierarchy shown in Fig. 13 is only an example. A variety of different hierarchies may exist. Topology primitives may be used to make up a variety of spatial features, and the spatial features may in turn make up N-levels (where N is an integer) of hierarchically related spatial features. Features and advantages of the present invention allow a user to efficiently reconstruct an Nth level feature from an (N-1)^{st} level spatial feature. In one embodiment, an Nth level feature may be constructed by identifying edges associated with the (N-1)^{st} level spatial feature. The Nth level feature may be obtained by deleting all edges that are listed twice to produce a distinct list of edges that may be used to define the Nth level feature in the hierarchy. For example, eliminating the shared edges from blocks B1-B6 will produce a list of edges that may be used to define county C1. The technique may be applied generally across any level of any hierarchically related group of spatial features to reconstruct each spatial feature in a hierarchy.

The following is an example of a group of tables that may be found in a database such as an Oracle® spatial database for a topology:

| Node$ | Edge$ | Face$ |
|---|---|---|
| Node_ID | Edge_ID | Face_ID |
| Edge_ID | Start_Node_ID | Boundary_Edge_ID |
| Face_ID | End_Node_ID | Island_edge_ID_list |
| GEOMETRY | Next_Left_Edge_ID | Island_node_ID_list |
| | Next_Right_Edge_ID | MBR_GEOMETRY |
| | Prev_Left_Edge_ID | |
| | Prev_Righ_Edge_ID | |
| | Left_Face_ID | |
| | Right_Face_ID | |
| | GEOMETRY | |

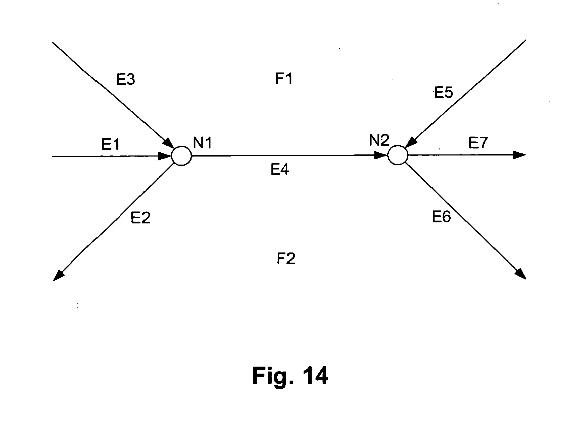

Nodes$ tables may include a unique ID number for the node, an edge ID for non-island nodes (positive for start nodes and negative for end nodes), a face ID for island nodes to associate a face with the island node, and a GEOMETRY that contains the point geometry with the location of the node. Edge$ tables may include a unique ID number associated with each edge in a topology. The Start_Node_ID is the start node of the edge. The End_Node_ID is the end node of the edge. The Next_Left_Edge_ID is the ID of the next edge encountered when traveling along the face on the edge's left. The Next_Right_Edge_ID is the ID of the next edge encountered when traveling along the face on the edge's right (i.e., in the opposite direction as for the Next_Len_Edge_ID). Prev_Left_Edge_ID is the previous edge encountered when traversing the left face. Prev_Right_Edge_ID is the previous edge encountered when traversing the right face. Left_Face_ID is the ID of the left face for the edge and Right_Face_ID is the ID of the right face to the edge. GEOMETRY contains the edge coordinates, which may be stored as a linear feature. The first coordinate and last coordinate correspond to the start node and end node, respectively. Fig. 14 illustrates a specific configuration. The following Table shows a convention that may be used for representing the primitives in Fig. 14.

| Edge_ID | Start_ Node_ ID | End_ Node_ ID | Next_ Left_ Edge_ID | Next_ Right_ Edge_ ID | Prev_ Left_ Edge_ ID | Prev_ Right_ Edge_ID | Left_ Face_ ID | Right_ Face_ ID | GEOMETRY |
|---|---|---|---|---|---|---|---|---|---|
| E4 | N1 | N2 | -E5 | E2 | E3 | -E6 | F1 | F2 | [...] |

Topological primitives may initially have no associated spatial features. A spatial feature may be defined by its association with a set of topological primitives. A spatial feature may be associate with many primitives, and a primitive may be associated with many different spatial features. One example approach may associate a spatial feature with primitives using a predefined data structure. Such a data structure may associate a particular spatial feature with the topological primitives it is composed of. For example, in an Oracle® application this may be accomplished using the "SDO_TOPO_GEOMETRY" data type, which may be a column in a table for associating spatial features with topology primitives. Each column may represent a different feature and multiple feature layers may be included in a topology.

Additional relationship data may be used for associating topology primitives to one or more spatial features. For example, a RELATION$ table may be included for "mapping" between spatial features and topology primitives. The relationship between spatial features and topological primitives may be many to many. The following is an example RELATION$ table:

| |
|---|
| RELATION$ |
| TG_LAYER_ID |
| TG_ID |
| TOPO_ID |
| TOPO_TYPE |

TG_LAYER_ID is a unique ID associated with each feature layer. TG_ID is a unique ID associated with a feature. TOPO_ID is a unique primitive ID (e.g., node_id, edge_id, face_id). TOPO_TYPE is the type of primitive (e.g., node = 1, edge = 2, face = 3).

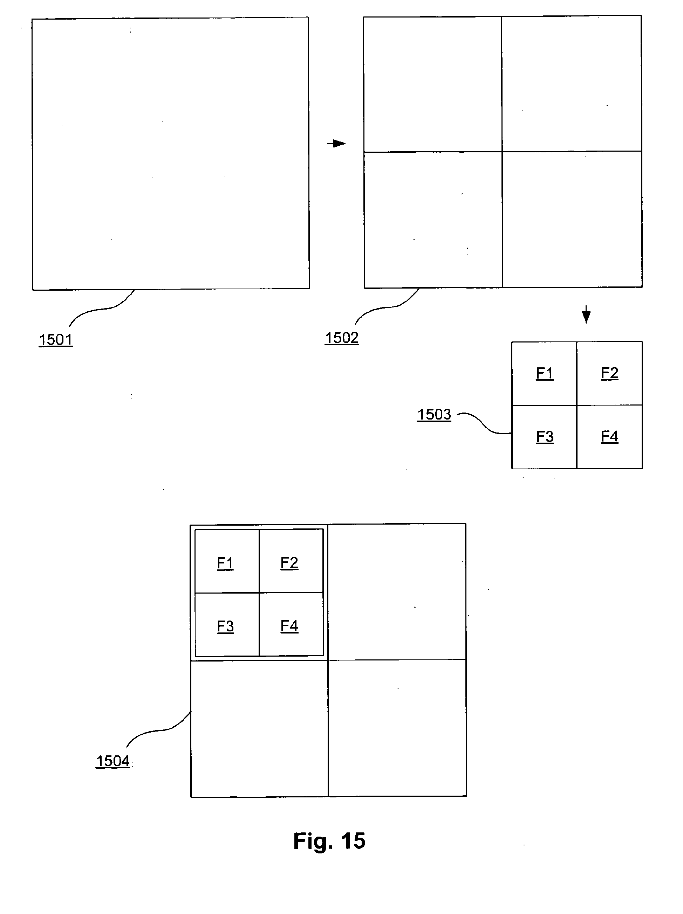

Fig. 15 is an example of a multilayer hierarchy. The features in this example include a county 1501 made up of four (4) block features 1502, which in turn are made up of four topology faces F1-F4. In this example, for each relationship associated with the county features, the system may proceed as follows: retrieve all relationships for all faces that in turn make up all blocks which in turn make up the county; compile a list of all the face IDs, compile a list of all the edges associated with the face IDs and discard any edges that have a left face and right face, and load the edges into a topology for constructing a polygon feature. The following is pseudo code for obtaining all the relations to the primitive level for a hierarchical polygon in a recursive functions call to a hierarchical relationship tree: 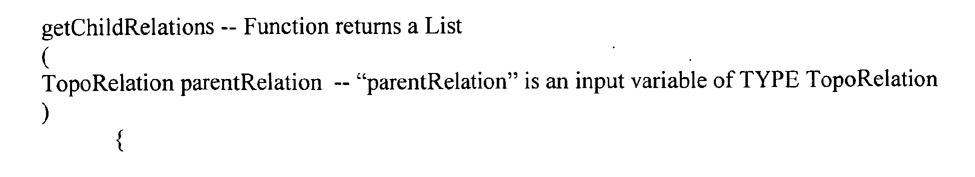 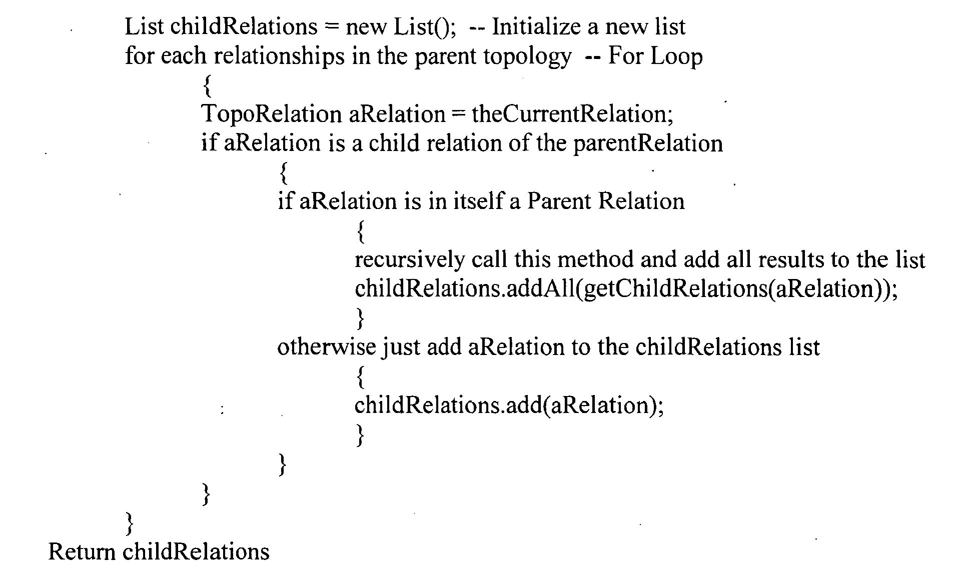 This example pseudo code illustrates how a parent relation table (e.g., a county relation table) may be used to recursively gather the primitives of children (e.g., blocks or any other sublevels) in a hierarchy.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the spirit and scope of the invention as defined by the claims.

## Claims

1. A method of processing spatial data comprising:
retrieving spatial data from a remote database;
loading the spatial data into a client; and
generating a spatial feature on the client using the spatial data.

2. The method of claim 1 further comprising editing the spatial data on the client.

3. The method of claim 2 further comprising loading the edited spatial data into the remote database as a topology.

4. The method of claim 1 further comprising displaying the spatial geometry object to a user.

5. The method of claim 1 wherein the spatial data is topology data.

6. The method of claim 5 wherein the topology data includes nodes, edges, or faces.

7. The method of claim 6 wherein the nodes, edges, or faces are stored in the remote database as a table, the topology data further comprising relationship data for associating topology primitives to the spatial feature.

8. The method of claim 1 wherein generating a spatial feature comprises reconstructing a spatial geometry object from a topology.

9. The method of claim 8 wherein reconstructing comprises identifying one or more edges that do not have adjacent faces and combining a plurality of points associated with the one or more edges to form a resulting spatial geometry.

10. The method of claim 8 wherein reconstructing comprises ordering edges based on common end nodes.

11. The method of claim 8 wherein reconstructing comprises identifying edges associated with a plurality of spatial features and deleting duplicate edges from the plurality of spatial features.

12. The method of claim 8 wherein the spatial geometry object comprises a point, a line, a polygon, a collection, or a hierarchy and associated reference data.

13. A method of processing spatial data comprising:
retrieving one or more first spatial geometry objects from a remote database;
loading the spatial geometry objects onto a client; and
transforming the first spatial geometry objects into topology primitives on the client.

14. The method of claim 13 further comprising editing the topology primitives on the client.

15. The method of claim 13 further comprising generating at least one spatial feature from the edited topology primitives.

16. The method of claim 13 further comprising reconstructing one or more second spatial geometry objects from the edited topology primitives.

17. The method of claim 16 further comprising storing the one or more second spatial geometry objects on the remote database.

18. The method of claim 16 wherein reconstructing comprises identifying one or more edges that do not have adjacent faces and combining a plurality of points associated with the one or more edges to form a resulting spatial geometry.

19. The method of claim 16 wherein reconstructing comprises ordering edges based on common end nodes.

20. The method of claim 16 wherein reconstructing comprises identifying edges associated with a plurality of spatial features and deleting duplicate edges from the plurality of spatial features.

21. The method of claim 16 wherein the one or more spatial geometry objects comprise a point, a line, a polygon, a collection, or a hierarchy.

22. A computer system, particularly a portable device, comprising a spatial data processor comprising a spatial editor for modifying topology data; and a spatial reconstruction engine for receiving topology data and transforming the topology data into a spatial geometry.
